# FASCICULE DE BREVET EUROPEEN

(11) **EP 0 885 135 B1**
(45) Date de publication et mention de la délivrance du brevet: **26.08.2009**
(21) Numéro de dépôt: 97953946.7
(22) Date de dépôt: 24.12.1997
(51) Int. Cl.: B60J 10/02

(54) **VITRAGE SURMOULE ET PROCEDE DE FABRICATION**
UMGOSSENE VERGLASSUNG UND VERFAHREN ZUR HERSTELLUNG
GLAZING MOULDED FROM A CASTING AND METHOD FOR MAKING SAME

(30) Priorité: 30.12.1996 FR 9616184
(43) Date de publication de la demande: 23.12.1998
(73) Titulaire: SAINT-GOBAIN GLASS FRANCE, 92400 Courbevoie (FR)
(72) Inventeur: ROZE, Jean-Pierre, F-60200 Compiègne (FR); LEFEVRE, Pascal, F-02300 Manicamp (FR); HUCHET, Gérard, F-02600 Retheuil (FR)
(74) Mandataire: Muller, René
(86) Numéro de dépôt international: PCT/FR1997/002422
(87) Numéro de publication internationale: WO 1998/029274

(56) Documents cités:
- EP-A- 0 375 577
- EP-A- 0 382 602
- US-A- 3 759 004
- US-A- 4 858 988
- US-A- 5 264 270
- US-A- 5 311 711

## Description

La présente invention se rapporte à un vitrage, en particulier un vitrage latéral fixe d'un véhicule de transport.

Les vitrages latéraux fixes de véhicules automobiles, notamment ceux installés à l'arrière des véhicules, tels que les glaces de custode, sont généralement pourvus, avant montage sur la carrosserie, d'un enjoliveur masquant la bordure du vitrage.

Pour un vitrage de forme donnée, on peut disposer d'un enjoliveur préfabriqué ayant une forme de cadre adaptée aux contours du vitrage, capable, au prix de légères déformations, de recevoir le vitrage qui vient s'enchâsser dans des logements prévus à cet effet. Cette technique entraîne toute une série d'inconvénients.

En premier lieu, le jeu inévitablement présent entre le vitrage et le cadre préfabriqué, dû à leurs tolérances de fabrication respectives, est source de vibrations lors de la mise en circulation du véhicule, il est donc indispensable de rendre les deux pièces solidaires par collage.

Même après collage, il résulte de ce jeu un positionnement relatif variable du cadre et du vitrage qui pose des problèmes lors de la mise en place du vitrage dans la carrosserie, l'opérateur ayant le choix de privilégier soit la position du vitrage, soit la position du cadre par rapport à la baie de carrosserie.

Le montage du vitrage suivant cette technique requiert donc un nombre élevé d'opérations parfois compliquées et par conséquent des besoins en main d'oeuvre importants.

On connaît également des vitrages pourvus de cadres périphériques surmoulés par injection de matière plastique sur le vitrage, notamment des lunettes de véhicules automobiles. Le cadre est traditionnellement constitué d'un matériau élastomère, soit thermoplastique, soit polymérisé *in situ* par la technique de l'injection réactive (RIM - Reaction Injection Molding), pour remplir en plus de sa fonction de protection des bords du vitrage, une fonction d'étanchéité. Pour remédier à la faible adhérence des élastomères usuels sur un substrat en verre, on a coutume, préalablement à l'injection, de déposer sur la zone périphérique du vitrage un revêtement primaire destiné à former une liaison adhésive avec l'élastomère. Cette opération supplémentaire de primage entraîne un surcoût non négligeable dans la fabrication du vitrage. La mise en oeuvre de cette technique coûteuse de surmoulage, ou encapsulatibn, ne se révèle pas compétitive pour des cadres de moindre fonctionnalité, en particulier ceux ayant essentiellement une fonction protectrice ou esthétique.

L'art antérieur connaît en particulier de la demande de brevet N° EP 371 773 un vitrage surmoulé d'un cadre en matière plastique, le vitrage étant pourvu d'une couche de matière adhésive sur les bords de ses faces principales coopérant avec le cadre.

L'art antérieur connaît par ailleurs la demande de brevet N° LU 47504 qui porte sur un cadre rigide en matière plastique moulé autour d'un vitrage afin de former un châssis de fenêtre de bâtiment étanche dont l'étanchéité est obtenue par l'adhérence du cadre au vitrage.

L'invention a pour but d'équiper un vitrage d'un cadre périphérique sans problème de positionnement relatif, d'une façon simple et reproductible, nécessitant peu de main d'oeuvre et relativement peu coûteuse.

Ce but, ainsi que d'autres qui apparaîtront par la suite, est atteint suivant l'invention par la technique du surmoulage en utilisant, au lieu des élastomères conventionnels, une matière plastique rigide pour former un cadre enserrant la bordure du vitrage. De manière inattendue, il est apparu qu'il était tout à fait possible de surmouler une matière plastique rigide sur un vitrage sans que celui-ci ne soit détérioré. Suivant l'invention, on réalise non plus une liaison adhésive du cadre sur le vitrage, mais une liaison par serrage mécanique due à la rigidité du matériau constitutif du cadre.

A cet égard, l'invention a pour objet un vitrage surmoulé selon la revendication 1. Le vitrage comprend un substrat en verre et/ou en matière plastique, monolithique ou feuilleté, équipé d'un cadre en matière plastique surmoulé à la périphérie du substrat, le cadre comportant sur au moins une partie de sa périphérie une gorge essentiellement en U enserrant la bordure du substrat et la matière plastique étant constituée d'un polymère ou d'un mélange de polymères thermoplastiques présentant un module en flexion de 1200 MPa à 3000 MPa.

Suivant différentes variantes de l'invention, le cadre peut présenter une gorge longitudinale continue enchâssant la bordure du substrat sur toute sa périphérie, ou bien comporter seulement des portions dotées d'une gorge en U. Le nombre, l'emplacement et la longueur desdites portions peuvent être déterminés aisément par le spécialiste, en fonction notamment de la rigidité de la matière thermoplastique utilisée ou du profil désiré pour le cadre, de façon à assurer la tenue en place du cadre sur le substrat. Par exemple, lorsque l'épaisseur de la matière surmoulée est relativement faible, le cadre est relativement flexible et il est préférable de prévoir des segments à gorge en U sur la majeure partie de la périphérie du cadre pour éviter les risques de déchaussement. Au contraire, un cadre surmoulé épais sera peu flexible et on obtiendra une tenue satisfaisante même avec peu de segments dotés d'une gorge.

Comme on le verra par la suite, les vitrages selon l'invention peuvent être équipés de cadres de sections très diverses, comportant notamment en plus de la gorge d'autres parties de formes définies, destinées à doter le cadre d'éléments fonctionnels présents sur toute sa longueur, tels qu'une lèvre longitudinale, ou limités à des points ou des segments du cadre, tels que des pions de centrage ou butées de positionnement.

Selon l'invention, le cadre surmoulé est constitué d'un polymère ou d'un mélange de polymères thermoplastiques rigides, renfermant éventuellement une charge organique ou minérale, caractérisé par un module en flexion, mesuré selon la norme NFT 51-001, de 1200 à 3000 MPa, tout particulièrement de l'ordre de 2000 à 3000 MPa. Dans certains modes de réalisation, le cadre peut exercer notamment une fonction de renforcement du vitrage.

Cette rigidité permet, après refroidissement de la matière plastique surmoulée, de conférer au cadre une force de serrage suffisante pour empêcher les deux ailes du U de s'écarter et de libérer le vitrage.

Avantageusement, la matière thermoplastique présente une dureté Shore D d'au moins 60, de préférence de 60 à 90.

La matière thermoplastique présente un certain retrait volumique pour contribuer au serrage . Toutefois, ce retrait ne doit pas être trop prononcé pour éviter que le vitrage ne casse sous l'action des contraintes occasionnées. La matière thermoplastique présente un retrait volumique de l'ordre de 0,1 à 1 %, de préférence de 0,1 à 0,8 %, notamment de l'ordre de 0,1 à 0,5 %.

Le ou les polymères thermoplastiques utilisables selon l'invention sont variés. On citera plus particulièrement comme exemples un polyester insaturé, polyamide, notamment polyamide 6 ou 6/6, du polypropylène, un polychlorure de vinyle rigide, du polystyrène, un acrylonitrile/butadiène/styrène, et leurs mélanges.

Dans le vitrage selon l'invention, le cadre surmoulé est maintenu solidement en place par la seule force de serrage qu'il exerce du fait de sa rigidité.

Pour prévenir d'éventuels défauts de tenue en place, en cas par exemple de dilatation forte de la matière sous l'effet de la chaleur, il est possible de compléter la force de serrage mécanique par une liaison adhésive partielle entre le substrat et le cadre surmoulé.

Ainsi, l'invention prévoit que l'on peut appliquer un primaire d'adhérence sur le chant du substrat, au moins sur une partie de sa longueur, pour favoriser l'adhérence de la matière plastique surmoulée uniquement sur le chant du substrat. Puisqu'il ne s'agit que d'une mesure complémentaire, un primage limité au chant du substrat est suffisant. En dépit de ce qui a été dit en préambule, cette variante reste avantageuse car elle ne requiert qu'une application approximative du primaire sur le chant du vitrage, contrairement à l'application précise sur toute la zone marginale du substrat dans le cas du surmoulage de matériaux élastomères. La quantité de composition de primaire utilisée suivant cette variante de l'invention est donc bien plus faible que dans l'art antérieur, et il est en outre possible de traiter plusieurs substrats en même temps, en appliquant la composition de primaire sur le chant d'une pile entière de vitrages. La cadence et le coût de production ne sont donc pas sensiblement affectés. Le primaire utilisable selon l'invention peut être de tout type connu, notamment à base de silane.

Comme on l'a dit précédemment, le cadre surmoulé équipant le vitrage selon l'invention a en général une forme adaptée au futur environnement du vitrage et peut notamment comporter divers éléments fonctionnels, tels que par exemple des butées de positionnement ou des éléments de fixation utilisables pour le montage du vitrage dans une baie. Il peut s'agir d'éléments continus présents sur toute la périphérie du cadre, ou bien d'éléments de longueur limitée à un segment particulier du cadre résultant d'une modification locale de la section profilée.

De tels éléments fonctionnels peuvent avoir une forme qui déborde au-delà du corps du cadre, par exemple pour masquer l'espace entre le vitrage et le fond de la feuillure ou un interstice dans la carrosserie. Dans une variante avantageuse cet élément débordant a une structure ajourée et peut jouer le rôle d'aérateur de custode intégré au vitrage.

Les éléments fonctionnels peuvent être moulés avec le reste du cadre dans un moule de section constante ou variable appropriée, mais aussi être portés par des inserts incorporés dans la matière thermoplastique injectée dans le moule de surmoulage.

Il peut également s'agir d'éléments rapportés sur le corps du cadre après l'opération de surmoulage, fixés notamment par collage. Par exemple, on peut disposer sur le pourtour du cadre moulé un cordon de matière souple déformable, qui lors du montage du vitrage dans une baie vient se plaquer contre le fond de la feuillure de la baie. Ce cordon, qui n'est pas nécessairement continu ni présent sur la totalité du pourtour du cadre, est susceptible de produire au moins trois effets avantageux : il limite les vibrations du vitrage dans la baie ; il réduit les problèmes de bruit aérodynamique ; et, lorsqu'il présente un coefficient de frottement sur la feuillure suffisant, il assure le maintien du vitrage en position pendant la prise de la colle de pose. Un matériau avantageusement utilisable pour constituer ce cordon est une mousse de polyuréthanne qui peut être mise en oeuvre de différentes façons, notamment par coulée, injection ou extrusion sur le cadre d'une matière fluide ou visqueuse durcissant in situ, ou bien par collage d'un cordon préextrudé au moyen d'un adhésif approprié.

La présence sur le cadre de ces éléments fonctionnels, tels qu'une forme débordant de la périphérie du vitrage ou un élément en liaison avec la baie, est rendue possible suivant l'invention grâce à l'excellente tenue du cadre due à la force de serrage exercée par la matière rigide surmoulée sur le substrat. Un cadre traditionnel préfabriqué par moulage puis emboîté sur le substrat, s'il était pourvu d'éléments analogues, ne donnerait pas satisfaction car les efforts résultant de l'interaction de ces éléments avec leur environnement affecteraient irrémédiablement la liaison mécanique relativement faible du cadre sur ce substrat, avec pour conséquence un risque élevé de déchaussement du cadre.

Le vitrage selon l'invention est particulièrement adapté aux nombreuses applications où une étanchéité totale n'est pas requise entre le vitrage et l'élément surmoulé. Un tel vitrage pourra avantageusement constituer un vitrage latéral pour automobile, fixé dans une baie de la carrosserie par l'intermédiaire d'un cordon de colle de pose déposé sur le substrat en verre lui-même, le cadre ayant une simple fonction d'enjoliveur et l'étanchéité entre le vitrage et la baie étant assurée par le cordon de colle lui-même.

Le surmoulage de la matière thermoplastique rigide utilisée selon l'invention est réalisable dans les appareillages usuels, suivant les étapes classiques: mise en place du substrat dans le moule, fermeture et mise sous pression du moule, injection du thermoplastique à l'état visqueux et enfin refroidissement. L'injection selon l'invention peut mettre en oeuvre une seule, mais aussi plusieurs matières plastiques suivant la technique de la co-injection. L'invention est également compatible avec des techniques plus complexes telles que l'injection assistée par un gaz (IAG). Suivant ce procédé, on injecte en même temps que la matière plastique un gaz inerte, typiquement de l'azote, de façon à former un canal, ou au minimum des bulles, dans le plastique injecté pour obtenir un cadre creux et économiser ainsi une proportion non négligeable de matière plastique. La mise au point des paramètres d'injection en IAG est cependant assez délicate et il arrive fréquemment que la bulle de gaz parvienne au contact du substrat. Avec les matières élastomères usuellement employées pour le surmoulage du verre, cette situation conduit à une perte d'adhérence du cadre sur le substrat très défavorable à l'intégrité du vitrage surmoulé. Cet inconvénient disparait dans la présente invention car la rigidité du cadre surmoulé compense les éventuels manques de matière dus à des défauts d'injection du gaz.

De façon générale, le spécialiste est à même de déterminer d'une manière connue en soi les principaux paramètres de l'injection, en tenant compte des caractéristiques rhéologiques et mécaniques de la matière thermoplastique. Suivant l'invention, l'étape de refroidissement est relativement critique puisque c'est là que la matière plastique commence à exercer une force de serrage sur la bordure du substrat. Parmi les paramètres critiques, la pression appliquée dans le moule dans cette étape pourra avantageusement être adaptée à chaque thermoplastique en fonction de son retrait volumique au refroidissement, afin de ne pas faire subir au substrat surmoulé des contraintes risquant de le fragiliser ou même de le casser. La vitesse de refroidissement, le gradient de température dans le moule sont d'autres paramètres à considérer.

A cet égard, l'invention propose un procédé de surmoulage amélioré comprenant une étape d'injection de matière thermoplastique dans un moule où le substrat a été préalablement disposé, suivie d'une étape de refroidissement, **caractérisé en ce que** le traitement thermique appliqué à la matière thermoplastique au cours de l'étape de refroidissement est ajusté localement de façon à contrôler le retrait volumique de la matière thermoplastique en chaque point du cadre surmoulé.

En particulier, on contrôlera avantageusement la température du moule dans l'étape de refroidissement, en prévoyant par exemple des canaux de refroidissement disposés de façon adéquate dans le moule pour imposer des températures différentes, et donc des taux de retrait différents, le long du pourtour du cadre. De cette façon, on peut créer des contraintes de serrage variables le long du cadre et ainsi ajuster la force de la liaison entre le cadre et le substrat en chaque point de ce dernier.

D'autres avantages et particularités de l'invention apparaîtront à la lumière de la description détaillée qui va suivre, faite en regard des dessins annexés, sur lesquels :
- La figure 1 : représente une vue en coupe transversale d'un premier vitrage selon l'invention ;
- La figure 2 : représente une vue en coupe transversale d'un second vitrage selon l'invention ;
- La figure 3 : représente une vue en coupe transversale d'un troisième vitrage selon l'invention.

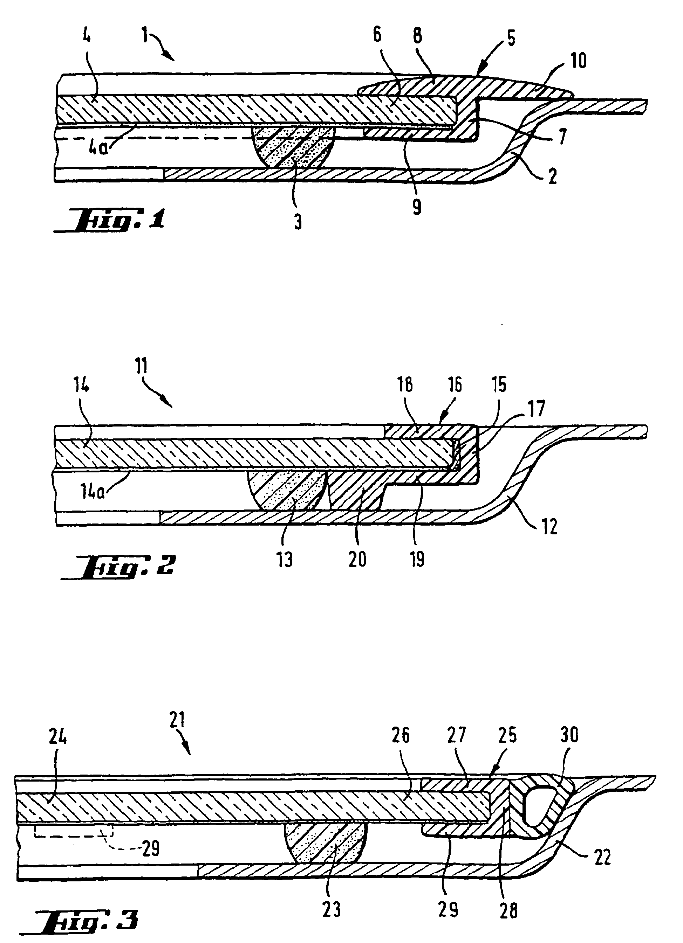

Le vitrage 1 représenté sur la figure 1 est destiné à être fixé par collage dans une custode 2 de véhicule automobile par l'intermédiaire d'un cordon de colle de pose 3.

Il comprend un substrat en verre 4 présentant sur sa face dirigée vers l'intérieure de la carrosserie une couche de préparation 4a, telle qu'une couche d'émail opaque, à laquelle adhère le cordon de colle 3, et un cadre périphérique 5, obtenu par surmoulage d'une matière thermoplastique rigide. A titre d'exemple particulier de thermoplastique rigide, on peut citer notamment un polychlorure de vinyle rigide ayant un module en flexion (suivant la norme NFT 51-001) d'environ 2000 MPa, une dureté Shore de 70 degrés environ dans l'échelle D et un retrait volumique de 0,3 %. Le cadre 5 présente une partie de section transversale en U dans laquelle est enchâssée la bordure 6 du substrat 4, et définissant une gorge longitudinale dont le fond 7 et les deux parois latérales 8 et 9 sont en contact avec la bordure 6. Le cadre 5 comporte également une partie saillante 10 en forme de lèvre s'étendant à l'extérieur du substrat 4, et qui masque le fond de la feuillure pratiquée dans la custode 2.

La figure 2 représente une variante de l'invention dans laquelle on réalise une liaison adhésive entre le cadre et le chant du substrat. Le vitrage 11, représenté fixé dans une custode 12 au moyen d'un cordon de colle 13, comprend un substrat en verre 14 comportant à la périphérie de sa face interne un revêtement opaque 14a, et dont le chant est recouvert d'un primaire de préparation 15 à base de silane, et un cadre 16 dont la section présente une partie en U dans laquelle est enchâssée la bordure du substrat 14 et qui définit une gorge longitudinale dont le fond 17 est au contact de la couche de primaire 15.

Lors de l'injection de la matière thermoplastique pour former le profilé 16, la matière thermoplastique interagit chimiquement avec la couche primaire appliquée sur le chant du substrat et il se crée une liaison adhésive entre le fond 17 de la gorge et le substrat par l'intermédiaire de la couche 15. Au contraire, la matière thermoplastique constituant les deux parois latérales 18 et 19 de la gorge en U n'interagit pas chimiquement avec les surfaces non traitées du substrat 14, de sorte qu'après refroidissement, les deux parois 18 et 19 n'exercent sur les surfaces du substrat qu'une action mécanique de serrage due à la rigidité de la matière thermoplastique.

Dans la variante représentée sur la figure 2, le profilé 16 comporte en outre une nervure longitudinale 20 destinée à limiter l'expansion du cordon de colle de pose 13 assurant la fixation du vitrage à la custode.

Dans une autre variante, la nervure 20 peut être remplacée par des butées de positionnement ponctuelles destinées à fixer l'écartement du vitrage 11 par rapport à la carrosserie.

La figure 3 illustre un autre mode de réalisation de l'invention dans lequel le substrat en verre est enserré dans le cadre non plus de façon continue sur toute sa périphérie, mais de façon discontinue seulement sur certains segments du cadre.

Le vitrage 21, représenté comme dans les exemples précédents collé à une feuillure 22 par un cordon de colle 23, comprend donc un substrat en verre 24 et un cadre 25 qui s'étend sur la périphérie du substrat 24 en recouvrant alternativement deux et trois faces de la bordure 26 de ce dernier. Le cadre 25 comprend ainsi des segments de section en U alternés avec des segments de section en L. La coupe représentée sur la figure 3 est réalisée dans un segment de section en U où le cadre comprend trois parois 27, 28, 29 au contact respectivement de la face extérieure, du chant et de la face intérieure du verre. Le long de ce segment, la zone marginale 26 du substrat est enserrée dans la gorge rigide formée par ces trois parois.

La partie de cadre représentée en arrière du plan de coupe comprend un long segment comportant deux parois en L au contact de la face extérieure et du chant du vitrage, et un autre segment plus court à nouveau de section en U avec une paroi 29 au contact de la face intérieure du substrat Le vitrage 21 comporte en outre un cordon souple 30, par exemple en mousse de polyuréthanne, collé sur la face externe de la paroi 28 du cadre 25 et qui sert à amortir les vibrations et les bruits aérodynamiques lors de la circulation du véhicule équipé du vitrage 21. Ce cordon permet en outre grâce au frottement exercé sur la feuillure 22 de maintenir le vitrage 21 en place pendant la durée de prise du cordon 23 de colle de pose. On notera que le cadre 25 tient parfaitement en place sur le substrat 21 aussi bien au cours de cette opération de pose que de l'utilisation ultérieure du véhicule, en dépit des efforts qui lui sont transmis par le cordon 30.

L'invention, qui vient d'être décrite dans le cas d'un vitrage pour véhicule automobile, n'est nullement limitée à ce mode de réalisation, mais est adaptée à de très nombreux types de vitrages.

## Revendications

1. Vitrage surmoulé comprenant un substrat (4;14;24) en verre et/ou en matière plastique, monolithique ou feuilleté, équipé d'un cadre (5;16;25) en matière plastique surmoulé à la périphérie du substrat, **caractérisé en ce que** le cadre comporte sur au moins une partie de sa périphérie une gorge essentiellement en U enserrant la bordure (6;26) du substrat en réalisant une liaison par serrage mécanique due à la rigidité du matériau constitutif du cadre sans liaison adhésive du cadre sur le substrat sauf éventuellement application d'un primaire d'adhérence uniquement sur le chant du substrat, sur au moins une partie de sa longueur, la matière plastique étant constituée d'un polymère thermoplastique ou d'un mélange de polymères thermoplastiques choisi parmi le polyamide, le polypropylène, le polychlorure de vinyle, le polystyrène, un terpolymère acrylonitrile - butadiène - styrène et leurs mélanges, ce polymère thermoplastique du mélange de polymères thermoplastiques présentant un module en flexion de 1200 à 3000 MPa et présentant un retrait volumique de 0,1 à 1 %.

2. Vitrage selon la revendication 1, **caractérisé en ce que** la matière thermoplastique présente une dureté Shore D d'au moins 60, de préférence de 60 à 90.

3. Vitrage selon la revendication 1 ou 2, **caractérisé en ce que** la matière thermoplastique présente un retrait volumique de 0,1 à 0,8 %, notamment de l'ordre de 0,1 à 0,5 %.

4. Vitrage selon l'une quelconque des revendications précédentes, **caractérisé en ce que** le chant du substrat est au moins en partie revêtu d'un primaire d'adhérence (15).

5. Vitrage selon l'une quelconque des revendications précédentes, **caractérisé en ce que** le cadre (16;25) surmoulé comporte au moins un élément fonctionnel (29;30), notamment un élément de positionnement ou de fixation utilisable pour le montage du vitrage dans une baie.

6. Vitrage selon la revendication précédente 5, **caractérisé en ce que** l'élément fonctionnel est porté par un insert incorporé dans la matière thermoplastique surmoulée.

7. Vitrage selon la revendication précédente 5, **caractérisé en ce que** l'élément fonctionnel est un cordon (30) souple collé sur le pourtour du cadre (25).

8. Procédé de fabrication d'un vitrage selon l'une quelconque des revendications précédentes comportant une étape d'injection de matière thermoplastique dans un moule où le substrat a été préalablement disposé, suivie d'une étape de refroidissement, **caractérisé en ce que** le traitement thermique appliqué à la matière thermoplastique au cours de l'étape de refroidissement est ajusté localement de façon à contrôler le retrait volumique de la matière thermoplastique en chaque point du cadre surmoulé.

## Claims

1. An encapsulated window comprising a substrate (4, 14, 24); and a frame (5, 16, 25) made of a plastic material which is overmoulded around the periphery of the substrate; **characterised in that** the frame includes, along at least part of its periphery, an essentially U-shaped groove which grips the border (6, 26) of the substrate producing a mechanical gripping bond due to the rigidity of the material of which the frame is composed, except eventually application of an adhesion primer only on the edge of the substrate, at least along part of its lenght; the plastic material being constituted of a thermoplastic polymer or a blend of thermoplastic polymers chosen from polyamide, polypropylene, polyvinyl chloride, polystyrene, an acrylonitrile-butadiene-styrene terpolymer, this thermoplastic polymer or a blend of thermoplastic polymers having a flexural modulus of 1200 MPa to 3 000 MPa and having a volume shrinkage of from 0.1 to 1 %.

2. The encapsulated window of claim 1, **characterised in that** the thermoplastic material has a Shore D hardness of at least 60, preferably of from 60 to 90.

3. Window according to claim 1 or 2, **characterised in that** the thermoplastic material has a volume shrinkage of from 0.1 to 0.8%, in particular from about 0.1 to 0,5 %.

4. Window according to any one of the preceding claims, **characterised in that** the edge of the substrate is at least partly coated with an adhesion primer (15).

5. Window according to any one of the preceding claims, **characterised in that** the overmoulded frame (16, 25) includes at least one functional component (29, 30), in particular a positioning or fixing component which can be used for fitting the window into an opening.

6. Window according to claim 5, **characterised in that** the functional component is carried by an insert incorporated into the overmoulded thermoplastic.

7. Window according to claim 5, **characterised in that** the functional component is a flexible bead (30) adhesively bonded to the perimeter of the frame (25).

8. Process for manufacturing a window according to any one of the preceding claims, including a step of injecting a thermoplastic material into a mould in which the substrate has been placed beforehand, followed by a cooling step, **characterised in that** the heat treatment applied to the thermoplastic material is adjusted locally during the cooling step and the volume shrinkage of the thermoplastic is controlled at each point of the overmoulded frame.

## Patentansprüche

1. Umgossene Verglasung umfassend ein Substrat (4, 14, 24) aus Glas und/oder aus Kunststoff, monolithisch oder geschichtet, welches am Außenrand des Substrats einen Rahmen (5, 16, 25) aus gegossenem Kunststoff aufweist, **dadurch gekennzeichnet, dass** der Rahmen auf zumindest einem Teil seines Umlaufs eine im Wesentlichen U-förmige Kehle aufweist, welche den Rand (6, 26) des Substrats umschließt, wodurch aufgrund der Festigkeit des Materials, aus welchem der Rahmen besteht, über zumindest einen Teil seiner Länge eine Verbindung des Rahmens mit dem Substrat über mechanisches Einspannen erzeugt wird, ohne dass eine Klebeverbindung, ausgenommen einer möglichen Anwendung eines Haftvermittlers lediglich auf dem Rand des Substrats, besteht, wobei der Kunststoff aus einem thermoplastischen Polymer oder aus einer Mischung von thermoplastischen Polymeren gewählt aus Polyamid, Polypropylen, PVC, Polystyrol, einem Acrylonitril-Butadien-Styrol-Terpolymer und ihren Verbindungen gebildet ist und wobei das thermoplastische Polymer oder die Verbindung aus thermoplastischen Polymeren ein Biegemodul von 1200 bis 3000 MPa aufweist und einen Volumenrückgang von 0,1 bis 1 %.

2. Verglasung gemäß Anspruch 1, **dadurch gekennzeichnet, dass** das thermoplastische Material eine Shore-Härte D von zumindest 60, vorzugsweise 60 bis 90 aufweist.

3. Verglasung gemäß einem der Ansprüche 1 oder 2, **dadurch gekennzeichnet, dass** das thermoplastische Material einen Volumenrückgang von 0,1 bis 0,8 %, insbesondere in der Größenordnung von 0,1 bis 0,5 % aufweist.

4. Verglasung gemäß einem der vorhergehenden Ansprüche, **dadurch gekennzeichnet, dass** der Rand des Substrats zumindest teilweise von einem Haftvermittler (15) bedeckt ist.

5. Verglasung gemäß einem der vorhergehenden Ansprüche, **dadurch gekennzeichnet, dass** der gegossene Rahmen (16, 25) zumindest ein funktionelles Element (29, 30) aufweist, insbesondere ein Element zur Positionierung oder zur Befestigung, welches für die Montage der Verglasung in ein Gehäuse verwendbar ist.

6. Verglasung gemäß Anspruch 5, **dadurch gekennzeichnet, dass** das funktionelle Element von einem Einsatz getragen wird, welcher ein Teil des gegossenen thermoplastischen Materials ist.

7. Verglasung gemäß Anspruch 5, **dadurch gekennzeichnet, dass** das funktionelle Element eine weiche Wulst (30) ist, welche über den Umfang des Rahmens (25) geklebt ist.

8. Verfahren zur Herstellung einer Verglasung gemäß einem der vorhergehenden Ansprüche umfassend einen Schritt des Injizierens eines thermoplastischen Materials in eine Form, in welcher zuvor das Substrat angeordnet wurde, gefolgt von einem Schritt des Abkühlens, **dadurch gekennzeichnet, dass** die auf das thermoplastische Material angewandte thermische Behandlung während des Abkühlungsschrittes lokal derartig abgestimmt wird, dass der Volumenrückgang des thermoplastischen Materials an jedem Punkt des umgossenen Rahmens kontrolliert wird.
